# EUROPÄISCHE PATENTANMELDUNG

(11) **EP 1 621 317 A1**
(43) Veröffentlichungstag der Anmeldung: **01.02.2006**
(21) Anmeldenummer: 05009207.1
(22) Anmeldetag: 27.04.2005
(51) Int. Cl.: B29C 45/30

(54) **Einspritzdüse zur Führung von Schmelzemasse in einer Kunststoffspritzgiessform**

(30) Priorität: 22.07.2004 DE 102004035629
(71) Anmelder: SFR Formenbau GmbH, 72770 Reutlingen (DE)
(72) Erfinder: Reinl, Horst, 72793 Pfullingen (DE)
(74) Vertreter: Ostriga, Sonnet, Wirths & Roche

(57) **Zusammenfassung**

Eine Einspritzdüse (10) zur Führung von Schmelzemasse in einer Kunststoffspritzgießform od. dgl., weist einen einen Schmelzekanal (12) umgebenden Düsenkern (11) auf, welcher an seiner Außenmantelfläche (16) eine Heizvorrichtung (16) trägt und welchem eine zu einer Formhöhlung (F) einer Werkzeugform weisende Düsenspitze (18) zugeordnet ist.

Der Düsenkern (11) besteht aus Stahl und weist mindestens einen Hohlraum (H1, H2) auf, welcher zumindest teilweise mit einer Metall-Einlage (21, 23) aus hochwärmeleitfähigem Metall gefüllt ist.

## Beschreibung

Die Erfindung betrifft eine Einspritzdüse zur Führung von Schmelzemasse in einer Kunststoffspritzgießform od. dgl., entsprechend dem Oberbegriff des Anspruchs 1.

Eine solche Einspritzdüse ist beispielsweise durch die DE 34 31 173 C2 bekannt.

Bei unkritischen Schmelzen, insbesondere bei nicht korrosiven und den Verschleiß nicht fördernden Schmelzen, kann ein Düsenkern aus Beryllium (Be) oder aus Kupferberyllium (CuBe) bestehen, zumal jene Metalle über eine sehr gute Wärmeleitfähigkeit verfügen und in der Lage sind, die über die elektrische Heizvorrichtung eingeleitete Wärme zur Schmelze und im übrigen zur Düsenspitze hin, also möglichst weit zum werkzeugseitigen Anspritzpunkt hin, zu transportieren.

Wenn indessen verschleißfördernde Schmelzen, beispielsweise mit Glasfaserzusatz, eingesetzt werden, ist ein aus Be oder aus CuBe gefertigter Düsenkern wegen der Verschleißanfälligkeit weniger günstig. Ähnliches gilt bezüglich der Korrosionsanfälligkeit von Be oder von CuBe, wenn z.B. bei Einsatz von flammgeschützten Kunststoffen austretende Gase Korrosion hervorrufen. Außerdem ist die Temperaturbelastbarkeit jener Legierungen insoweit nicht immer ausreichend, weil z.B. CuBe bei ca. 380°C aushärtet.

Hinzu kommt, dass Beryllium oder Beryllium-Legierungen einen relativ kostenaufwendigen Werkstoff darstellen.

Um die aufgezeigten Nachteile weitestgehend zu vermeiden, ist entsprechend der DE 34 31 173 C2 innerhalb des aus Be bestehenden Düsenkerns ein Schmelzeführungsrohr aus rost- und säureresistentem Stahl, z.B. aus Molybdän oder aus einer Molybdänlegierung, vorgesehen. Dieses Schmelzeführungsrohr ist dazu bestimmt, die Kunststoffschmelze bis zur Düsenspitze hin zu führen. Bei der Einspritzdüse gemäß der DE 34 31 173 C2 bediente man sich immerhin noch eines relativ kostenaufwendigen Düsenkerns aus Be.

Von der DE 694 03 513 T2 ist eine nicht der engeren Gattung entsprechende Einspritzdüse mit einem Torpedo-Einsatz bekannt. Der bekannte Torpedo-Einsatz weist einen zentralen Schaft mit einem spitz zulaufenden vorderen Ende, der Torpedo-Spitze also, auf, welche sich bezüglich der Fließrichtung der Schmelze stromabwärts hinter einem äußeren Kragen erstreckt. Stromaufwärts bzw. rückwärtig ist der zentrale Schaft mit einem gerundeten Ende versehen, welches sich rückwärts hinter dem äußeren Kragen erstreckt. Der zentrale Schaft weist innen einen Kern auf, welcher von einem Außenmantel umgeben ist. Der innere Kern besteht aus einem thermisch hochleitfähigem Material, wie z.B. aus Silber oder aus Kupfer. Der Außenmantel hingegen besteht aus einem abnutzungsbeständigen und korrosionsbeständigen Material, wie z.B. aus Schnellstahl.

Der Vorteil der von der DE 694 03 513 T2 bekannten Torpedo-Spitze besteht darin, dass der aus thermisch hochleitendem Material gefertigte Kern den vorbeschriebenen Wärmetransport in die Düsenspitze hinein gestattet, während der aus Stahl bestehende Außenmantel, welcher indessen eine geringere Wärmeleitfähigkeit besitzt, den verschleißanfälligen Kern vor der aggressiven Schmelze schützt.

Ausgehend der eingangs beschriebenen Einspritzdüse gemäß der DE 34 31 173 C2, liegt der Erfindung die Aufgabe zugrunde, die bekannte Einspritzdüse so auszugestalten, dass diese weitestgehend unempfindlich gegen korrosive oder verschleißfördernde Schmelzen ist und zugleich einen hinreichend guten Wärmetransport von der Heizvorrichtung in den Düsenkern und von diesem in die Schmelze hinein gestattet.

Diese Aufgabe wird gemeinsam mit den Merkmalen des Oberbegriffs des Anspruchs 1 mit dessen kennzeichnenden Merkmalen dadurch gelöst, dass der Düsenkern aus Stahl besteht und mindestens einen Hohlraum aufweist, welcher zumindest teilweise mit einer Metall-Einlage aus hochwärmeleitfähigem Metall gefüllt ist.

Entsprechend der Erfindung besteht der Düsenkern aus einem gegen korrosive und verschleißfördernde Schmelzen weitestgehend unempfindlichen Stahl, beispielsweise der Güte 2343, der als gehärteter oder als vorvergüteter Stahl in den Handel gelangt.

Ein solcher Düsenkern ist nicht so kostenaufwendig und lässt sich leichter spangebend herstellen als beispielsweise ein Düsenkern aus Beryllium. Der erfindungsgemäße Düsenkern aus Stahl weist mindestens einen Hohlraum auf, welcher also der Heizvorrichtung benachbart ist und zumindest teilweise mit einer Metall-Einlage aus hochwärmeleitfähigem Metall, beispielsweise aus Kupfer, insbesondere aus Reinkupfer, gefüllt ist.

Der erfindungsgemäße Düsenkern gestattet demnach einen relativ guten Wärmedurchgang bzw. Wärmeübergang von der elektrischen Heizvorrichtung zum Schmelzekanal, dessen Innenmantelfläche von dem weitestgehend gegen korrosive und verschleißfördernde Schmelzen unempfindlichen stählernen Düsenkern gebildet ist.

Für besondere Anwendungsfälle kann die den Schmelzekanal umgebende Wandfläche auch mit einer Schicht aus chemisch Nickel versehen sein, welche die Anfälligkeit gegen korrosive und verschleißfördernde Schmelzen noch zusätzlich reduziert.

In weiterer Ausgestaltung der Erfindung weisen der Hohlraum und die Metall-Einlage je einen langgestreckten Längsquerschnitt auf. Dabei ist es vorteilhaft, dass sich der langgestreckte Längsquerschnitt über einen erheblichen Teil der Axiallänge des aus Stahl bestehenden Düsenkerns erstreckt.

Zweckmäßig sieht die Erfindung außerdem vor, dass sich die Längsmittelachse des langgestreckten Hohlraums und der Metall-Einlage parallel zur Längsmittelachse des Düsenkerns erstrecken.

Eine erhebliche zusätzliche Verbesserung besteht erfindungsgemäß darin, dass sich die Längsmittelachse des langgestreckten Hohlraums und der Metall-Einlage jeweils geneigt zur Längsmittelachse des Düsenkerns erstrecken. Dabei schneiden der Hohlraum und die Metall-Einlage die Außenmantelfläche des Düsenkerns an oder durchdringen diese. Hiermit ist die besonders positive Folge verbunden, dass sich ein Bereich der Metall-Einlage in einem den Wärmedurchgang bzw. Wärmeübergang besonders fördernden unmittelbaren Kontakt mit der elektrischen Heizvorrichtung befindet.

Für besondere Anwendungsfälle kann diese Ausführungsform so ausgestaltet sein, dass der sich mit einem Winkel geneigt zur Längsmittelachse des Düsenkerns erstreckende Hohlraum ein von der Außenmantelfläche des Düsenkerns ausgehendes, im Sacklochtiefsten einen Boden bildendes Sackloch ist.

Dabei kann das Sackloch beispielsweise als Sacklochbohrung von der Außenmantelfläche des Düsenkerns her eingebracht sein. Der am Boden des Sacklochs verbleibende Stahlwerkstoff des Düsenkerns bildet eine Wärmebremse, die einen zu großen Wärmefluss bezüglich des Schmelzestroms stromaufwärts reduziert.

Das vorbezeichnete Anschneiden oder Durchdringen kann entsprechend einer weiteren erfindungsgemäßen Variante darin bestehen, dass der sich parallel zur Längsmittelachse des Düsenkerns erstreckende Hohlraum sowie die sich korrespondierend erstreckende Metall-Einlage die Außenmantelfläche des Düsenkerns mit je einer Längsseite anschneiden oder durchdringen.

Die andere diesbezügliche vorteilhafte erfindungsgemäße Variante besteht darin, dass sich der mit seiner Längsmittelachse geneigt zur Längsmittelachse des Düsenkerns erstreckende Hohlraum sowie die sich korrespondierend erstreckende Metall-Einlage die Außenmantelfläche des Düsenkerns im Bereich ihrer Stirnseiten anschneiden oder durchdringen.

Die Metall-Einlage kann unterschiedlich ausgebildet sein. So besteht eine erfindungsgemäße Ausführungsform darin, dass der Hohlraum eine sich koaxial zum Düsenkern erstreckende, die Außenmantelfläche des Düsenkerns durchdringende Außenringnut und die Metall-Einlage einen die Außenringnut ausfüllenden Außenring bilden. Dabei kann die Außenmantelfläche des Außenringes sich in einem unmittelbaren Kontakt mit der Heizvorrichtung befinden.

Zweckmäßig kann die ringförmige Metall-Einlage derart beschaffen sein, dass diese einen sie axial durchsetzenden Montageschlitz aufweist. Der Montageschlitz gestattet es, den Umfang der Metall-Einlage elastisch zu vergrößern, so dass diese in die vom Düsenkern gebildete Außenringnut einschnappen kann.

Eine andere erfindungsgemäße Möglichkeit besteht darin, dass die Metall-Einlage einen in den Hohlraum eingesetzten starren Metallstift bildet.

Auch ermöglicht es die Erfindung, dass die Metall-Einlage aus eingepresstem und gegebenenfalls gesintertem Metallpulver oder aus einer Knetlegierung besteht.

Eine fertigungstechnisch einfache Art, den jeweiligen Hohlraum herzustellen, besteht darin, dass der Hohlraum und, dazu korrespondierend die Metall-Einlage, zumindest teilweise einen Kreisquerschnitt aufweisen.

Eine andere erfindungsgemäße Art, einen Hohlraum zur Aufnahme der Metall-Einlage zu bilden, besteht darin, dass sich bei einem parallel zur Längsmittelachse des Düsenkerns erstreckenden Hohlraum, welcher, eine Längsöffnung bildend, mit seiner Längsseite die Außenmantelfläche des Düsenkerns durchdringt, sowie bei einer sich korrespondierend dazu erstreckenden Metall-Einlage der Hohlraum einen hinterschnittenen Querschnitt aufweist, durch dessen Längsöffnung oder durch dessen stirnseitige Öffnung hindurch die Metall-Einlage einsetzbar oder eindrückbar ist.

Die vorbeschriebene erfindungsgemäße Ausführungsform wird dadurch weiter entwickelt, dass die einen starren Metallstift bildende und durch die Längsöffnung des einen hinterschnittenen Querschnitt aufweisenden Hohlraums oder durch dessen stirnseitige Öffnung hindurch einsetzbare oder eindrückbare Metall-Einlage einen dem Querschnitt des Hohlraums ähnlichen, jedoch gegenüber letzterem Untermaß aufweisenden, Querschnitt besitzt. Diese vorteilhafte erfindungsgemäße Ausführungsform gestattet eine leichte Montage der Metall-Einlage und gewährleistet zugleich einen guten Wärmedurchgang bzw. Wärmeübergang, da sich die hochwärmeleitfähige Metall-Einlage, die z.B. aus Kupfer oder einer Kupferlegierung bestehen kann, infolge ihres gegenüber Stahl größeren Wärmeausdehnungskoeffizienten bei Erwärmung der Anordnung eng gegen die Innenwandfläche des die Metall-Einlage aufnehmenden Hohlraums anlegt.

Eine besonders zweckmäßige erfindungsgemäße Ausführungsform besteht darin, dass die Metall-Einlage des jeweiligen Hohlraum gänzlich ausfüllt.

Einen guten Wärmedurchgang bzw. Wärmeübergang von der Heizvorrichtung zur jeweiligen Metall-Einlage wird entsprechend der Erfindung dadurch realisiert, dass der die Außenmantelfläche des Düsenkerns schneidende oder durchdringende Bereich der Metall-Einlage flächenbündig an die düsenkernseitige Außenmantelfläche und an deren Querschnittsstruktur angepasst ist.

Die beschriebenen Einspritzdüsen befassen sich insbesondere mit folgendem Problem:
Im hinteren Bereich, also in dem bezüglich der Strömung der Schmelze stromaufwärts gelegenen Bereich, bildet jede Einspritzdüse regelmäßig eine verhältnismäßig große Metallanhäufung. Diese Metallanhäufung kann zudem nicht von der Heizvorrichtung unmittelbar kontaktiert werden, so dass dort ein Wärmemangel herrscht. Mittels der erfindungsgemäßen Metall-Einlagen wird nun die Wärme innerhalb des Düsenkerns nach hinten zur Schmelze hin transportiert, was mittelbar auch zu einer Temperaturerhöhung der Schmelze im Bereich der Düsenspitze führt. Demnach wird erfindungsgemäß auch ein Wärmemangel an der Düsenspitze behoben. Mit den erfindungsgemäßen Merkmalen kann insbesondere das Wärmeprofil entlang dem Schmelzekanal vergleichmäßigt werden.

Insgesamt betrachtet, können die erfindungsgemäßen Metall-Einlagen dazu benutzt werden, den Wärmetransport innerhalb des stählernen Düsenkerns zu organisieren, d.h. die Wärme kann mittels der Metall-Einlagen an die Stellen des Düsenkerns geleitet werden, an denen die Wärme benötigt wird.

Falls es indessen im mittleren Bereich einer Einspritzdüse zu einem sogenannten "Wärmebauch", d.h. zu einer Erhöhung im Wärmeprofil kommen sollte, können bei besonderen Anwendungsfällen zusätzliche Maßnahmen ergriffen werden. Diese können darin bestehen, dass etwa im mittleren Bereich der Einspritzdüse der Düsenkörper mit einer Freidrehung versehen ist. Im Bereich dieser Freidrehung herrscht demnach kein unmittelbarer Kontakt zwischen der Heizvorrichtung und dem Düsenkern. Vielmehr befindet sich im Bereich der Freidrehung ein den Wärmedurchgang beziehungsweise Wärmeübergang verminderndes Luftpolster zwischen der Heizvorrichtung und dem Düsenkern. Hierdurch kann der "Wärmebauch" entfallen oder reduziert werden. Die Freidrehung kann auch mit einem Metall geringerer Wärmeleitfähigkeit, also mit einer Wärmebremse, z.B. aus Titan, ausgefüllt sein.

In den Zeichnungen sind bevorzugte Ausführungsbeispiele entsprechend der Erfindung dargestellt, es zeigt
Fig. 1 einen Axialschnitt durch eine erste Ausführungsform einer Einspritzdüse,
Fig. 2 einen Radialschnitt entsprechend der Schnittlinie II-II in Fig. 1,
Fig. 3 in Anlehnung an den Axialschnitt gemäß Fig. 1 eine zweite Ausführungsform,
Fig. 4 in Anlehnung an die Darstellungen gemäß den Fig. 1 und 3 eine dritte Ausführungsform.
Fig. 5 einen Radialschnitt entsprechend der Schnittlinie V-V in Fig. 4

In den Zeichnungen sind einander analoge Elemente und andere einander analoge Einzelheiten trotz unterschiedlicher Ausgestaltung mit denselben Bezugszeichen versehen.

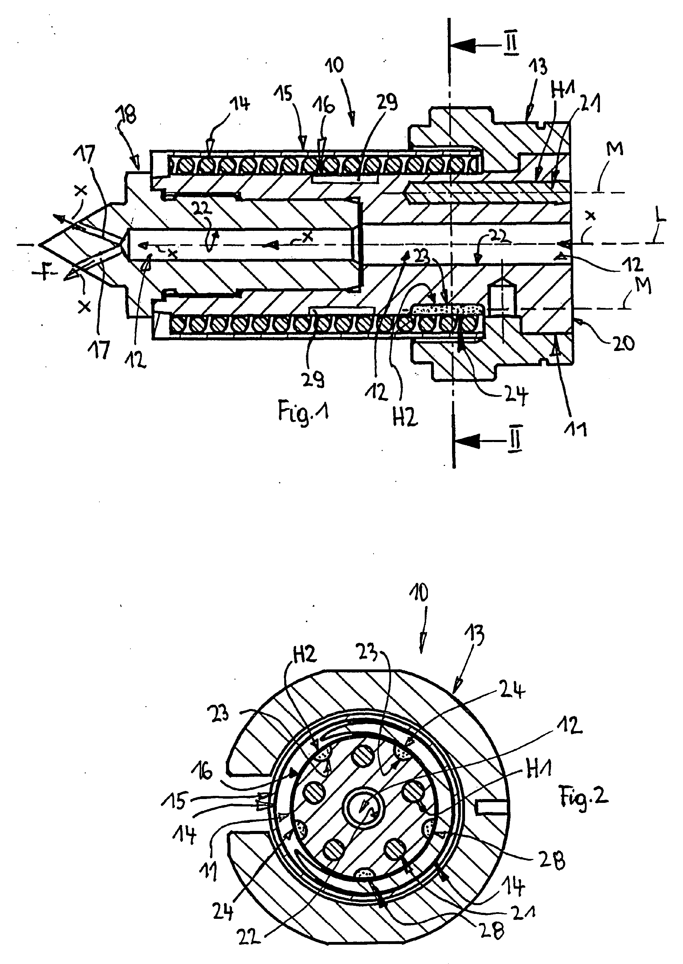

Eine Einspritzdüse zur Führung einer Kunststoffschmelzemasse ist in den Fig. 1-5 jeweils mit 10 bezeichnet. Bei den gezeigten Ausführungsbeispielen handelt es sich um gehäuselose Einspritzdüsen, deren hauptsächliches Bauteil jeweils von einem Düsenkern 11 gebildet ist, der einen zentralen Schmelzekanal 12 umgibt.

Die jeweilige Fließrichtung des Schmelzestroms ist mit x bezeichnet, während die Längsmittelachse der Anordnung das Bezugszeichen L trägt.

Der Düsenkern 11 trägt bezüglich der Fließrichtung x stromaufwärts bzw. rückseitig einen Einbauadapter 13 zur werkzeugseitigen Montage. Da der Einbauadapter 13 aus Titan besteht, wird der Wärmeabfluß im werkzeugseitigen Einbaufeld begrenzt. Düsenkern 11 und Einbauadapter 13 bilden mit flächenbündigem Übergang eine gemeinsame ebene hintere Stirnfläche 20.

Außen ist der Düsenkern 11 von einem gewendelten Rohrheizkörper 14 umgeben, welcher mittels einer etwa rohrförmigen Hülse 15 eng gegen die kreiszylindrische Außenmantelfläche 16 des Düsenkörpers 11 gehalten wird.

Der Rohrheizkörper 14 wird über eine nicht dargestellte Kabeleinspeisung mit elektrischer Energie versorgt.

Bezüglich der Fließrichtung x stromabwärts bzw. vorn ist in den Düsenkern 11 eine Düsenspitze 18 eingeschraubt, welche ebenfalls einen Bereich des zentralen Schmelzekanals 12 umgibt, der schließlich in Ausströmkanäle 17 mündet, die zu einem lediglich mit dem Buchstaben F angedeuteten werkzeugseitigen Formhohlraum führen.

Anstelle des Rohrheizkörpers 14 kann auch in nicht dargestellter Weise eine elektrische Heizmanschette vorgesehen sein, deren Innenmantelfläche - ebenso wie der Rohrheizkörper 14 - eng an der Außenmantelfläche 16 des Düsenkerns 11 anliegt, um einen guten Wärmedurchgang bzw. Wärmeübergang zu gewährleisten.

In einem geringen Radialabstand von der Außenmantelfläche 16 des Düsenkerns 11 entfernt, weist letzterer innen entsprechend den Fig. 1 und 2 fünf sich parallel zur Längsmittelachse L erstreckende Hohlräume H1 in Gestalt von kreiszylindrischen Axialbohrungen auf. Jeder Hohlraum H1 ist mittels einer Metall-Einlage 21 gänzlich und satt ausgefüllt.

Die Metall-Einlage 21 und 23 entsprechend den Fig. 1 besteht jeweils aus einem starren kreiszylindrischen Stift aus Reinkupfer, CuBe oder aus einer anderen Cu-Legierung.

Der Düsenkern 11 selbst, ebenso wie die Düsenspitze 18, können aus einem gehärteten oder vorvergüteten Stahl, beispielsweise der Güte 2343 bestehen. Damit ist die Innenwandfläche 22 des Schmelzekanals 12 hinreichend widerstandsfähig gegen korrosive und mechanische Abnutzung. Darüber hinaus besteht grundsätzlich die Möglichkeit, die Stahlkörper 11, 18, 19, so also auch die Kanäle 12 und 17, mit einer Schicht aus chemisch Nickel zu versehen.

In die Außenmantelfläche 16 des Düsenkerns 11 sind außerdem im Querschnitt etwa halbkreisförmige, sich axial und parallel zur Längsmittelachse L erstreckende Längshohlräume H2 eingearbeitet, welche, was aus den Zeichnungen nicht genau ersichtlich ist, jeweils eine nach außen hin offene Längsöffnung 28 und einen geringfügig hinterschnittenen Querschnitt, also einen Kreisabschnitt mit einem Umfangswinkel von etwas mehr als jeweils 180° bilden. Da die mit Punktschraffur gekennzeichneten Metall-Einlagen 23 korrespondierend zum Querschnitt der Längshohlräume H2 ausgebildet sind, nehmen letztere die Metall-Einlagen 23 mit hinreichend sicherem Formschluss auf.

Die Metall-Einlagen 23 sind hinsichtlich ihrer Anschnittbereiche 24 so bearbeitet, dass die Anschnittbereiche 24 flächenbündig an die düsenkernseitige Außenmantelfläche 16 und an deren kreisförmige Querschnittskontur angepasst sind. Auf diese Weise kann der Rohrheizkörper 14 die Außenumfangsfläche 16 und die Anschnittbereiche 24 zur Erzielung eines optimalen Wärmedurchgangs bzw. Wärmeübergangs dicht anliegend kontaktieren.

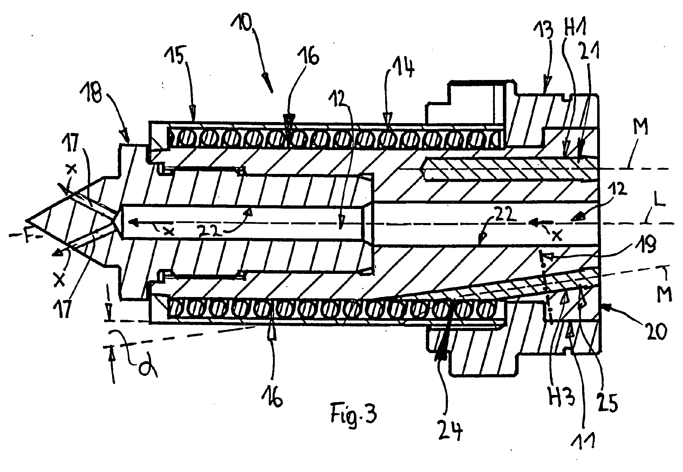

Die zweite Ausführungsform gemäß Fig. 3 unterscheidet sich von der in den Fig. 1 und 2 dargestellten ersten Ausführungsform im wesentlichen dadurch, dass anstelle der Metall-Einlage 23 entsprechend den Fig. 1 und 2 eine Metall-Einlage 25 gewählt wurde.

Dabei erstreckt sich die Längsmittelachse M des Hohlraums H3 mit einem Winkel α geneigt bezüglich der Längsmittelachse L. Die Metall-Einlage 25, welche ebenfalls einen Metallstift aus Reinkupfer, aus CuBe oder aus einer anderen Cu-Legierung bildet, schneidet die Außenmantelfläche 16 des Düsenkerns 11 mit einem langgestreckten teilkreisförmig gewölbten Anschnittbereich 24 an, welcher ebenfalls flächenbündig an die Außenmantelfläche 16 des Düsenkerns 11 und an deren kreiszylindrische Oberfläche angepasst ist. Auf diese Weise ergibt sich zwischen dem Rohrheizkörper 14 und dem Anschnittbereich 24 der Metall-Einlage 25 ein den Wärmedurchgang bzw. Wärmeübergang begünstigender inniger Kontakt.

Bei der Ausführungsform gemäß Fig. 3 besteht überdies die Möglichkeit, dass der sich mit dem Winkel α geneigt zur Längsmittelachse L des Düsenkerns 11 erstreckende Hohlraum H3 eine von der Außenmantelfläche 16 des Düsenkerns 11 ausgehende Sackbohrung bildet. Es ist vorstellbar, dass die Sackbohrung etwa an der in Fig. 3 mit einer Strichpunktlinie 19 angedeuteten Stelle im Bohrungstiefsten endet und dort einen Boden bildet. Der benachbart des Bodens bei 19 verbleibende Werkstoff des stählernen Düsenkerns 16 kann so bei bestimmten Anwendungsfällen eine Wärmebremse bilden, die einen zu großen Wärmeabfluss stromaufwärts, d.h. entgegen der Fließrichtung x, reduziert.

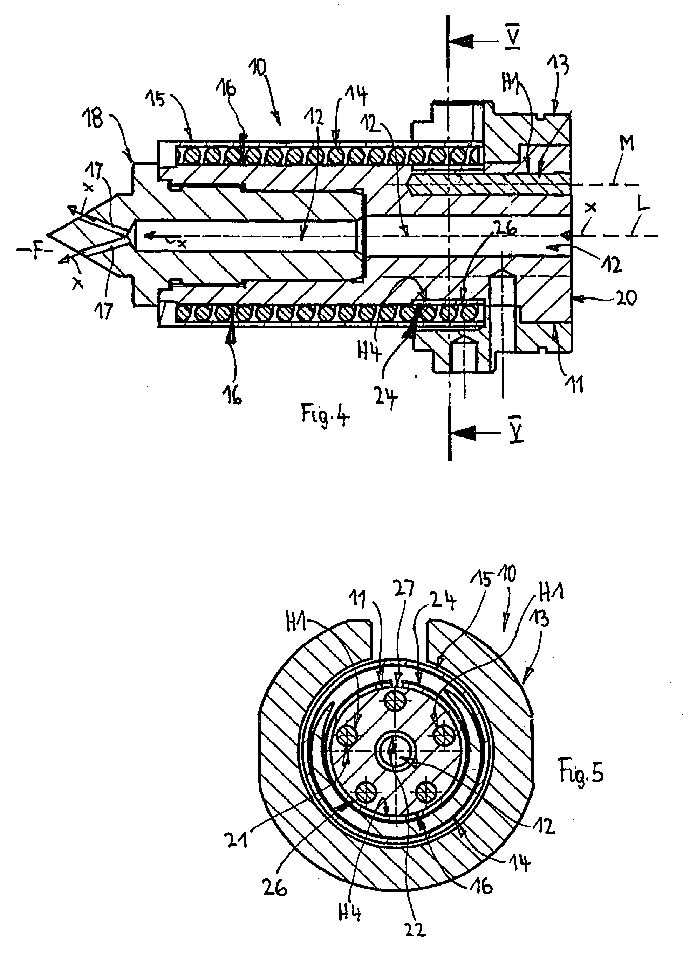

Die dritte Ausführungsform entsprechend den Fig. 4 und 5 unterscheidet sich von der ersten Ausführungsform entsprechend den Fig. 1 und 2 dadurch, dass bei der Ausführungsform gemäß den Fig. 4 und 5 anstelle der Metall-Einlage 23 eine ringförmige Metall-Einlage 26 vorhanden ist, welche in einem sich koaxial zum Düsenkern 11 erstreckenden, in die Außenmantelfläche des Düsenkerns eingelassenen, eine Außenringnut bildenden Hohlraum H4 angeordnet ist.

Damit sich die Metall-Einlage 26 besser montieren lässt, weist diese einen sich axial über die gesamte Breite der Metall-Einlage 26 erstreckenden Montageschlitz 27 auf. Auch die Anschnittfläche 24 der ringförmigen Metall-Einlage 26 erstreckt sich flächenbündig bezüglich der Außenmantelfläche 16 des Düsenkerns 11.

Die in den Fig. 1-5 gezeigten Einspritzdüsen 10 befassen sich insbesondere mit folgendem Problem:
Im hinteren Bereich, also in dem bezüglich der Strömung x der Schmelze stromaufwärts gelegenen Befestigungsbereich, bildet jede Einspritzdüse 10 regelmäßig eine verhältnismäßig große Metallanhäufung. Diese Metallanhäufung kann zudem nicht von der Heizvorrichtung 14 unmittelbar kontaktiert werden, so dass dort ein Wärmemangel herrscht. Mittels der erfindungsgemäßen Metall-Einlagen 21, 23, 25, 26 wird nun die Wärme innerhalb des Düsenkerns 11 nach hinten zur Schmelze hin transportiert, was mittelbar auch zu einer Temperaturerhöhung der Schmelze im Bereich der Düsenspitze 18 führt, d.h. auch ein Wärmemangel an der Düsenspitze 18 wird erfindungsgemäß behoben. Mit den erfindungsgemäßen Merkmalen kann insbesondere das Wärmeprofil entlang dem Schmelzekanal 12 vergleichmäßigt werden.

Insgesamt betrachtet, können die erfindungsgemäßen Metall-Einlagen 21, 23, 25, 26 dazu benutzt werden, den Wärmetransport innerhalb des stählernen Düsenkerns 11 zu organisieren, d.h. die Wärme kann mittels der Metall-Einlagen 21, 23, 25, 26 an die Stellen des Düsenkerns 11 geleitet werden, an denen die Wärme benötigt wird.

Falls es indessen im mittleren Bereich einer Einspritzdüse zu einem sogenannten "Wärmebauch", d.h. zu einer partiellen Erhöhung des Wärmeprofils kommen sollte, können bei besonderen Anwendungsfällen zusätzliche Maßnahmen ergriffen werden. Diese können, wie exemplarisch anhand von Fig. 1 gezeigt ist, darin bestehen, dass etwa im mittleren Bereich der Einspritzdüse 10 der Düsenkern 11 mit einer gänzlich oder teilweise umlaufend angeordneten Freidrehung 29 versehen ist.

Im Bereich dieser Freidrehung 29 herrscht demnach kein unmittelbarer Kontakt zwischen der Heizvorrichtung 14 und dem Düsenkern 11. Vielmehr befindet sich im Bereich der Freidrehung 29 ein den Wärmedurchgang beziehungsweise Wärmeübergang verminderndes Luftpolster zwischen der Heizvorrichtung (Rohrheizkörper 14) und dem Düsenkern 11.

Hierdurch kann der "Wärmebauch" entfallen oder reduziert werden. Die Freidrehung 29 kann auch mit einem Metall geringerer Wärmeleitfähigkeit, also mit einer Wärmebremse, z.B. aus Titan, ausgefüllt sein.

## Patentansprüche

1. Einspritzdüse (10) zur Führung von Schmelzemasse in einer Kunststoffspritzgießform od. dgl., mit einem einen Schmelzekanal (12) umgebenden Düsenkern (11), welcher an seiner Außenmantelfläche (16) eine Heizvorrichtung (14) trägt und welchem eine zu einer Formhöhlung (F) einer Werkzeugform weisende Düsenspitze (18) zugeordnet ist, **dadurch gekennzeichnet, dass** der Düsenkern (11) aus Stahl besteht und mindestens einen Hohlraum (H1, H2, H3, H4) aufweist, welcher zumindest teilweise mit einer Metall-Einlage (21, 23, 25, 26) aus hochwärmeleitfähigem Metall gefüllt ist.

2. Einspritzdüse nach Anspruch 1, **dadurch gekennzeichnet, dass** der Hohlraum (H1, H2, H3) und die Metall-Einlage (21, 23, 25) je einen langgestreckten Längsquerschnitt aufweisen.

3. Einspritzdüse nach Anspruch 2, **dadurch gekennzeichnet, dass** sich die Längsmittelachse (M) des langgestreckten Hohlraums (H1, H2) und der Metall-Einlage (21, 23) parallel zur Längsmittelachse (L) des Düsenkerns (11) erstrecken.

4. Einspritzdüse nach Anspruch 2, **dadurch gekennzeichnet, dass** sich die Längsmittelachse (M) des langgestreckten Hohlraums (H3) und der Metall-Einlage (25) jeweils mit einem Winkel (α) geneigt zur Längsmittelachse (L) des Düsenkerns (11) erstrecken.

5. Einspritzdüse nach einem der Ansprüche 1 bis 4, **dadurch gekennzeichnet, dass** der Hohlraum (H1, H2, H3, H4) und die Metall-Einlage (21, 23, 25, 26) die Außenmantelfläche (16) des Düsenkerns (11) anschneiden (bei 24) oder durchdringen.

6. Einspritzdüse nach Anspruch 4 oder nach Anspruch 5, **dadurch gekennzeichnet, dass** der sich mit einem Winkel (α) geneigt zur Längsmittelachse (L) des Düsenkerns (11) erstreckende Hohlraum (H3) ein von der Außenmantelfläche (16) des Düsenkerns (11) ausgehendes, im Sacklochtiefsten einen Boden (bei 19) aufweisendes Sackloch bildet.

7. Einspritzdüse nach Anspruch 3 oder nach Anspruch 5, **dadurch gekennzeichnet, dass** der sich parallel zur Längsmittelachse (L) des Düsenkerns (11) erstreckende Hohlraum (H2) sowie die sich korrespondierend erstreckende Metall-Einlage (23) die Außenmantelfläche (16) des Düsenkerns (11), eine Längsöffnung (28) bildend, mit je einer Längsseite anschneiden oder durchdringen.

8. Einspritzdüse nach Anspruch 4 und nach Anspruch 5, **dadurch gekennzeichnet, dass** sich der mit seiner Längsmittelachse (M) geneigt zur Längsmittelachse (L) des Düsenkerns (11) erstreckende Hohlraum (H3) sowie die sich korrespondierend erstreckende Metall-Einlage (25) die Außenmantelfläche (16) des Düsenkerns (11) im Bereich ihrer Stirnseiten anschneiden oder durchdringen.

9. Einspritzdüse nach einem der Ansprüche 1 bis 8, **dadurch gekennzeichnet, dass** der Hohlraum (H4) eine sich koaxial zum Düsenkern (11) erstreckende, die Außenmantelfläche (16) des Düsenkerns (11) durchdringende Außenringnut und die Metall-Einlage (26) einen die Außenringnut ausfüllenden Außenring bilden.

10. Einspritzdüse nach Anspruch 9 **dadurch gekennzeichnet, dass** die ringförmige Metall-Einlage (26) einen letztere axial durchsetzenden Montageschlitz (27) aufweist.

11. Einspritzdüse nach einem der Ansprüche 1 bis 10, **dadurch gekennzeichnet, dass** die Metall-Einlage (21, 23, 25, 26) aus Cu, aus CuBe oder aus einer anderen Cu-Legierung besteht.

12. Einspritzdüse nach einem der Ansprüche 1 bis 11, **dadurch gekennzeichnet, dass** die Metall-Einlage (21, 23, 25) einen in den Hohlraum (H1, H2, H3) eingesetzten starren Metallstift bildet.

13. Einspritzdüse nach einem der Ansprüche 1 bis 11, **dadurch gekennzeichnet, dass** die Metall-Einlage aus eingepresstem und gegebenenfalls gesintertem Metallpulver oder aus einer Knetlegierung besteht.

14. Einspritzdüse nach einem der Ansprüche 1 bis 13, **dadurch gekennzeichnet, dass** der Hohlraum (H1, H2, H3) und, dazu korrespondierend die Metall-Einlage (21, 23, 25), zumindest teilweise einen Kreisquerschnitt aufweisen.

15. Einspritzdüse nach einem der Ansprüche 1 bis 14, **dadurch gekennzeichnet, dass** sich bei einem parallel zur Längsmittelachse (L) des Düsenkerns (11) erstreckenden Hohlraum (H2), welcher, eine Längsöffnung (28) bildend, mit seiner Längsseite die Außenmantelfläche (16) des Düsenkerns (11) durchdring, sowie bei einer sich korrespondierend dazu erstreckenden Metall-Einlage (23) der Hohlraum (H2) einen hinterschnittenen Querschnitt aufweist, durch dessen Längsöffnung (28) oder durch dessen stirnseitige Öffnung hindurch die Metall-Einlage (23) einsetzbar oder eindrückbar ist.

16. Einspritzdüse nach Anspruch 15, **dadurch gekennzeichnet, dass** die einen starren Metallstift bildende und durch die Längsöffnung (28) des einen hinterschnittenen Querschnitt aufweisenden Hohlraums (H2) oder durch dessen stirnseitige Öffnung hindurch einsetzbare oder eindrückbare Metall-Einlage (23) einen dem Querschnitt des Hohlraums (H2) ähnlichen, jedoch gegenüber letzterem Untermaß aufweisenden, Querschnitt besitzt.

17. Einspritzdüse nach einem der Ansprüche 1 bis 16, **dadurch gekennzeichnet, dass** die Metall-Einlage (21, 23, 25, 26) den Hohlraum (H1, H2, H3, H4) gänzlich ausfüllt.

18. Einspritzdüse nach einem der Ansprüche 1 bis 17, **dadurch gekennzeichnet, dass** der die Außenmantelfläche (16) des Düsenkerns (11) schneidende oder durchdringende Bereich (24) der Metall-Einlage (23, 25, 26) flächenbündig an die düsenkernseitige Außenmantelfläche (16) und an deren Querschnittsstruktur angepasst ist.
